# EUROPEAN PATENT APPLICATION

(11) **EP 0 709 761 A1**
(43) Date of publication of application: **01.05.1996**
(21) Application number: 95307111.5
(22) Date of filing: 06.10.1995
(51) Int. Cl.: G06F 1/16, H01M 2/10

(54) **Apparatus for loading and unloading a battery**

(30) Priority: 25.10.1994 JP 260141/94
(71) Applicant: International Business Machines Corporation, Armonk, N.Y. 10504 (US)
(72) Inventor: Ishii, Shigeru, Hadano-shi, Kanagawa-ken (JP); Horiuchi, Mitsuo, Sagamihara-shi, Kanagawa-ken (JP); Yoshikawa, Wataru, Fujisawa-shi, Kanagawa-ken (JP)
(74) Representative: Williams, Julian David

(57) **Abstract**

A latch portion 66 of a latch lever 60 is driven by a leaf spring 68 and engages a recessed portion 50, which is formed in an upright wall 48 of a battery 20, and holds the battery 20 in the use position in a battery storage section 24. To disengage the latch portion 66 from the recessed portion 50, the latch lever 60 is rotated by manipulating a knob 84. When the battery 20 is then pulled and shifted toward an insertion port 22, a plunger 90 engages the recessed portion 50 and prevents the battery 20 from falling out of the battery storage section 24. Therefore, even if a battery 20 is being removed while a data processing apparatus is in an inclined position, the battery 20 does not slide out of the battery storage section 24.

## Description

The present invention relates to a mechanism for loading and unloading a battery that is loaded in a data processing apparatus.

In a data processing apparatus that incorporates a mechanism whereby a battery is slid into and stored within a battery storage section that is provided in a case, a latch that is provided in the battery storage section engages a recessed portion that is formed in the battery to lock the battery in its use position.

In such a data processing apparatus, the latch is manipulated so that it disengages the recessed portion that is formed in a battery and the battery can thereafter be extracted from the battery storage section. When the latch is disengaged from the recessed portion, the weight of the battery may cause it to drop out of the battery storage section.

Especially with a portable data processing apparatus, a battery may have to be replaced with a new one while the apparatus is being held in the hands or is resting on a lap; conditions that increase the possibility that the battery may inadvertently slide out of a battery storage section and fall. Further, with a data processing apparatus that has an ejection spring, which is provided on the back wall of its battery storage section, to facilitate the removal of the battery, the battery will slide out more easily.

In accordance with the present invention, there is now provided apparatus for releasably storing a battery in a battery storage section of a data processing system, the apparatus comprising: a recessed portion located in a side of the battery; first stopping means located in the battery storage section for engaging the recessed portion and for holding the battery in a stored position; and second stopping means located in the battery storage section between an insertion port of the battery storage section and the first stopper, for engaging the recessed portion of the battery when the battery is being released from the stored position.

This advantageously prevents the battery from sliding out of and falling from a battery storage section after the battery has been disengaged.

Preferably, the first stopping means comprises: a latch lever, supported rotatably at a middle portion, the latch lever having a latch portion formed at one end, and a knob formed at the other end, the latch portion being capable of engaging the recessed portion in the side of the battery, and the knob being operable externally of the battery storage section; first forcing means for driving the latch portion toward the battery; and wherein the second stopping means comprises: a plunger, located closer to the insertion port of the battery storage section than the latch portion, for entering and engaging the recessed portion of the battery as it is removed; and second forcing means for driving the plunger toward the battery.

The first forcing means preferably comprises a leaf spring which is an integrally formed adjunct of the latch lever and which has a free end that contacts the wall of the battery storage section so as to push the latch portion toward the battery.

The plunger preferably presses down a rotary shaft of the latch lever.

A wall of the recessed portion toward the back of the battery storage section is preferably perpendicular to the direction of movement of the battery, a wall of the recessed portion that is nearer the insertion port of the battery storage portion is preferably inclined toward the insertion port relative to the direction of movement of the battery, inclined faces are preferably formed at the distal end of the plunger in a direction away from the side of the battery, and the distal end of the latch portion is preferably inclined toward the insertion port relative to the direction of movement of the battery.

Springs are preferably provided at the back wall of the battery storage section to push the battery toward the insertion port.

It will be appreciated that the present invention extends to a computer system comprising such apparatus as hereinbefore described. Likewise, it will be appreciated that the present invention extends to a lap-top computer comprising such a computer system.

In a preferred embodiment of the present invention, the first stopping means engages the recessed portion that is provided in the side of the battery, and holds the battery in the use position within the battery storage section.

When the first stopping means is operated to disengage the recessed portion and the battery is shifted and withdrawn toward the insertion port, the second stopping means then engages the recessed portion to prevent the battery from sliding out of the battery storage section. Therefore, even when the battery is pulled forward while the data processing apparatus is inclined, the battery will not fall out of the battery storage section.

In a particularly preferred embodiment of the present invention, the middle portion of the latch lever is supported rotatably. The latch portion of the latch lever is pushed toward the battery by the first forcing means, so that the latch portion of the latch lever engages the recessed portion of the battery and holds the battery in the use position within the battery storage section.

When the knob of the latch lever is manipulated from the outside of the battery storage section and the latch lever is rotated to disengage the latch portion from the recessed portion, the battery can be pulled toward the insertion port and withdrawn.

When the battery is withdrawn to some extent, the plunger that is driven by the second forcing means is extended into the recessed portion and engages it to prevent the battery that is being extracted from falling out.

In an especially preferred embodiment of the present invention, the first forcing means comprises the leaf spring that is integrally formed with the latch lever. The free end of the leaf spring abuts upon the wall of the battery storage section and drives the latch portion toward the battery.

By integrally forming a leaf spring as described above, the number of required items can be decreased and the human effort required for assembling can be reduced.

In an example of the present invention to be described shortly, since the plunger presses down on the rotary shaft of the latch lever, a separate member that is to be employed to prevent the rotary shaft from riding free is not required.

In a preferred example of the present invention, when the battery is inserted into the battery storage section, first, a corner of the battery abuts upon an inclined face of the plunger and drives the plunger back against the force exerted by the second forcing means. Second, when the plunger reaches the recessed portion, it is driven into the recessed portion by the force of the second forcing means until its distal surface engages the back wall of the recessed portion.

Then, as the battery continues to be inserted, an inclined face of the plunger is brought into contact with and slides along the inclined wall of the recessed portion, until the plunger is removed from the recessed portion and its distal surface is in contact with a side wall of the battery.

Following this, as the battery is inserted farther, the corner of the battery first abuts upon the distal inclined end of the latch portion, and then the latch lever is rotated, against the force exerted by the first forcing means, so that the latch portion is shifted in the direction that is away from the battery.

Then, as the battery is inserted farther, the latch portion reaches the recessed portion and is driven into the recessed portion by the force exerted by the first forcing means. The latch portion, by fully engaging the recessed portion, holds the battery in use position.

On the other hand, when the knob of the latch lever is manipulated and the latch lever is rotated, the latch portion is removed from the recessed portion, making it possible to withdraw the battery. As the battery is being withdrawn, when the recessed portion reaches the plunger, the plunger is driven into and engages the recessed portion.

When the battery is withdrawn farther, the wall of the recessed portion that is perpendicular to the direction of movement of the battery presses against the inclined face of the plunger and pushes the plunger back to disengage it from the recessed portion. Following this, the battery can be removed from the battery storage section.

In a particularly preferred example of the present invention, springs are provided on the back wall of the battery storage section that push the battery toward the insertion port. When the latch portion of the latch lever is disengaged from the battery, therefore, the battery is automatically and continuously driven until the plunger engages the recessed portion.

A preferred embodiment of the present invention will now be described, by way of example only, with reference to the accompanying drawings in which:
Fig. 1 is a general perspective view illustrating the internal arrangement of a PC (Personal Computer) in which is employed apparatus for releasably storing a battery according to an embodiment of the present invention;
Fig. 2 is an exploded perspective view illustrating an embodiment of the present invention;
Fig. 3 is a general perspective view illustrating a PC that including an embodiment of the present invention;
Fig. 4 is a perspective view showing the state where a battery is being extracted from an example of apparatus of the present invention;
Fig. 5 is a plan view showing operation procedures of an embodiment of the present invention;
Fig. 6 is a plan view showing operation procedures of an embodiment of the present invention; and
Fig. 7 is a plan view showing operation procedures of an embodiment of the present invention.

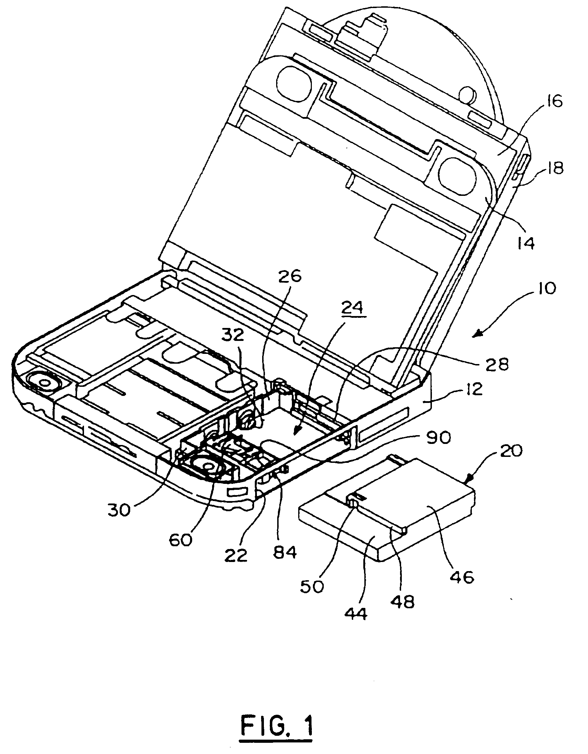

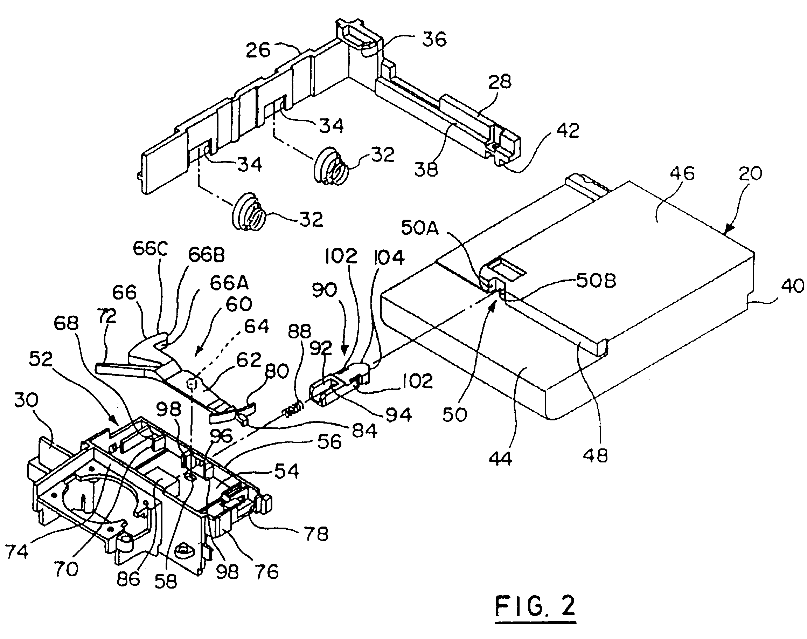

In Figs. 1 through 4 is shown a PC (Personal Computer) 10 that employs a mechanism for loading and unloading a battery.

The PC 10 has a rectangular body case 12. A keyboard 14 is mounted on the top opening of the body case 12, and a cover 18, in which a display 16 is provided, is so attached that it can be opened and closed.

An insertion port 22 for a battery 20 is formed in the side wall of the body case 12, and communicates with a battery storage section 24. The insertion port 22 is designed to be shielded with a long cover 23. A lock claw 25, which projects beyond the top edge of the cover 23, is inserted into a lock hole (not shown) that is formed in the edge of the opening at the insertion port 22. Protrusions 27 extend from both longitudinal ends of the cover 23, and are employed to secure the bottom end of the cover 23 to the opening edge to the insertion port 22. A flexible claw 29 is provided on the reverse of the cover 23. When the cover 23 is pushed in the direction indicated by the arrow A, the flexible claw 29 first bends and then slides into and engages a cover retention hole (not shown).

The shape of the battery storage section 24 is defined by a back plate 26, at the rear of the battery storage section 24, and side plates 28 and 30, which extend from both ends of the back plate 26 to the insertion port 22. Wide grooves 34 that can engage the respective ends of springs 32 are formed in the back plate 26. The springs 32 that engage the grooves 34 abut upon the distal, inserted end of the battery 20 and provide the force required to push the battery 20 out of the battery storage section 24.

A retaining piece 36 extends inward longitudinally along the side plate 28 from the junction of the side plate 28 and the back plate 26. The retaining piece 36 presses down on the distal end corner of the battery 20 and prevents the battery 20 from rising while it is in use.

Further, a step 38 is provided on the side plate 28 extending in the longitudinal direction. A step 40 that is formed on the lower end of the battery 20 contacts the step 38 and guides the battery 20 as it is loaded into, or unloaded from, the battery storage section 24. An angular portion 42, which is also formed on the side plate 28 close to the insertion port 22, engages a protrusion (not shown) that projects from the side face of the battery 20 to prevent the battery 20 from rising.

The battery 20 is an almost rectangular block; with a plate shaped raised portion 46 so formed on its top surface as to describe a wide, L-shaped step face 44 in a plan view. A recessed portion 50 is formed in a side wall 48 of the raised portion 46. A wall 50A of the recessed portion 50, which is closer to the back plate 26, is perpendicular to the direction in which the battery 20 is moved. A wall 50B, which is closer to the insertion port 22, is inclined, at an angle of almost 45° to the direction in which the battery 20 is moved, in order to provide a wide front opening for the recessed portion 50.

A receptacle 52, which is open at its top, extends out, from the upper portion of the side plate 30, and above the step face 44 of the battery 20. The step face 44 of the battery 20 is guided along the bottom wall 54 of the receptacle 52, and a side face 48 of the battery 20 travels along a side wall 56 of the receptacle 52.

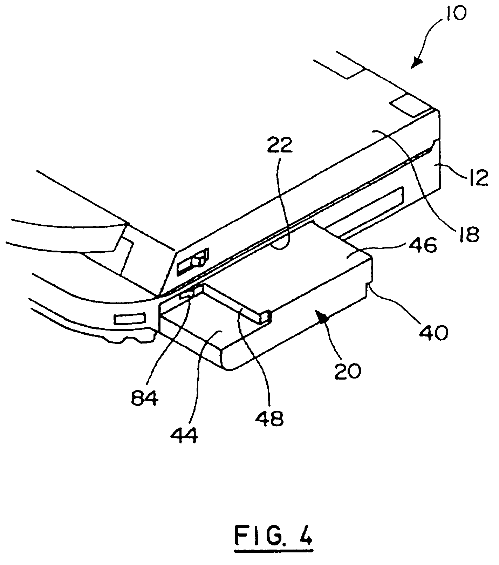

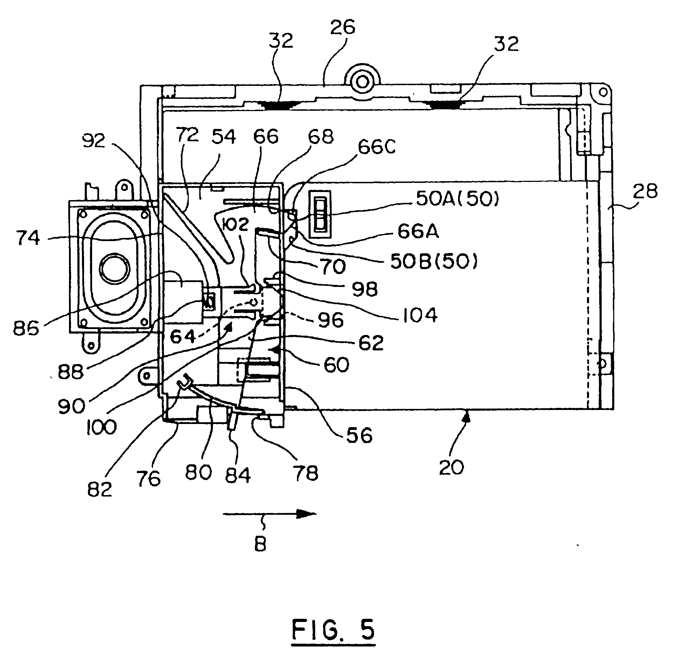

As is shown in Figs. 4 and 5, a shaft 64, which protrudes downward from a thin plate arm 62 that constitutes the middle portion of the latch lever 60, is supported rotatable in a shaft hole 58, which is drilled in the bottom wall 54 of the receptacle 52. A thick latch portion 66, whose distal end is curved toward the battery 20, is integrally formed with the arm 62 on the side closer to the back plate 26. As the latch lever 60 is rotated, the latch portion 66 can be projected from a latch port 68, which is formed in the side wall 56 of the receptacle 52. A curved guide plate 70 is provided inside the receptacle 52 at the latch port 68, and is employed to guide a lower face 66A of the latch portion 66 and to limit the distance the latch portion 66 can be projected from the latch port 68.

An inclined face 66B, which has an inclination of almost 45° relative to the back plate 26 is formed with the distal end of the latch portion 66, can contact the face of the wall 50B of the recessed portion 50.

Further, a leaf spring 72 that extends in a diagonal direction away from the latch portion 66 is integrally formed with the arm 62. The free end of the leaf spring 72 abuts upon the side wall 74 of the receptacle 52, and provides the force to rotate the latch lever 60 on the shaft 64 and to urge the latch portion 66 toward the battery 20.

An operational port 78 is formed in a side wall 76 of the receptacle 52. The operational port 78 is shielded by a curved, hidden plate 80 that is positioned at the end of the arm 62. One end of the hidden plate 80 abuts upon a stopper 82 that projects upward from the bottom plate 54 of the receptacle 52 and limits the rotation of the latch lever 60.

A knob 84 extends from the surface of the hidden plate 80, and projects through the operational port 78. When the knob 84 is moved in the direction indicated by the arrow B, the latch lever 60 is rotated counterclockwise against the urging force exerted by the leaf spring 72.

A square shaped storage box 86 is provided on the side wall 74 of the receptacle 52. A spring 88 is inserted into the storage box 86 and abuts upon the side wall 74. The distal end of the spring 88 encircles a pin 94 that projects from the upright wall of a spring recess 92 in the rear portion of the plunger 90. By pushing the plunger 90 into the storage box 86 with the spring 88 positioned as described, the plunger 90 is constantly driven in the direction in which it would be ejected from the storage box 86.

An opening 96 is formed in a side wall 56 of the receptacle 52, and a pair of guide walls 98 are provided that extend from the edges of the opening 96 to the storage box 86. The plunger 90 is guided along the guide walls 98 when it is projected from the opening 96.

Steps 100, which are formed in the ends of the guide walls 98, engage flexible toothed extensions 102, which extend longitudinally from the side of the plunger 90, in order to prevent the plunger 90 from sliding out.

The distal end of the plunger 90 is tapered, and inclined faces 104, which are inclined at an angle of about 45° relative to the storage box 86, are formed. At the inclined faces 104, the insertion force, or the withdrawal force, of the battery 20 is converted into a lateral force for driving the plunger 90 back into the receptacle 52.

In addition, as is shown in Fig. 5, since the plunger 90 is so designed that it passes over the arm 62 of the latch lever 60 and presses down the shaft 64, an additional member for pressing down the shaft 64 of the latch lever 60 is not required.

A mechanism for loading and unloading a battery according to the present invention will now be described.

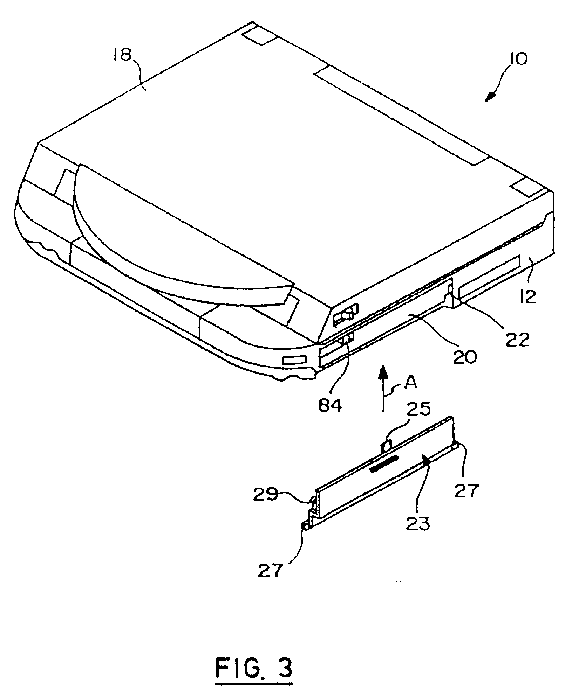

As is shown in Fig. 3, when the battery 20 is to be unloaded from the PC 10, first, the cover 23 that encloses the insertion port 22 is removed.

At this time, since, as is shown in Fig. 5, the battery 20 is forced toward the insertion port 22 by the spring 32, and as clockwise rotating force is exerted on the latch lever 60 by the leaf spring 72, the latch portion 66 extends into and engages the recessed portion 50 and locks the battery 20 in the use position. The plunger 90, which abuts upon the side face 48 of the battery 20, is pushed back into the receptacle 52. As the wall face 50A of the recessed portion 50 is engaged by a top face 66C of the latch portion 66, the battery 20 will not be mistakenly disengaged.

When the knob 84 is shifted in the direction indicated by the arrow B, the latch lever 60 is rotated at the shaft 64 and the latch portion 66 is extracted from the recessed portion 50. Then, the battery 20 is automatically driven outward by the urging force of the spring 32.

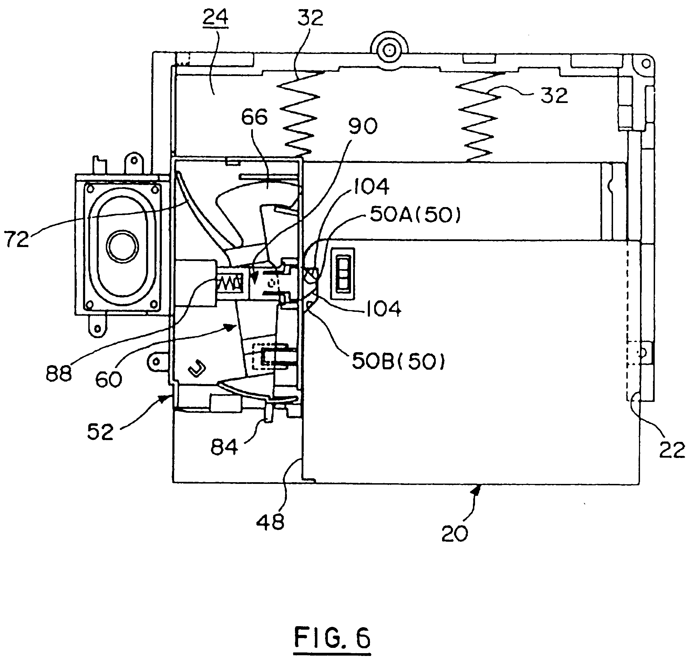

When, as is shown in Fig. 6, the battery 20 is being removed and the recessed portion 50 reaches the position of the plunger 90, the plunger 90, which is driven by the spring 88, enters and engages the recessed portion 50 and stops the movement of the battery 20. Therefore, even if the battery 20 is being removed while the PC 10 is in an inclined position, the battery 20 will not slip out of the battery storage section 24.

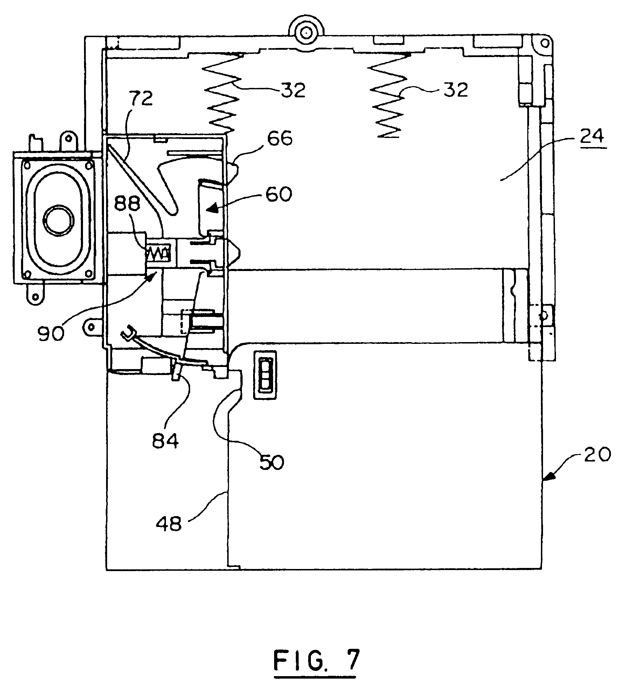

When the battery 20 is manually unloaded, the inclined face 104 of the plunger 90 is pushed back by the wall 50B of the recessed portion 50, and the plunger 90 is returned to the receptacle 52. Thus, as is shown in Fig. 7, the plunger 90 disengages the recessed portion 50, and the battery 20 can be removed from the battery storage section 24.

On the other hand, when the battery 20 is inserted through the insertion port 22 into the battery storage section 24, first, the corner of the battery 20 abuts upon the inclined face 104 of the plunger 90, and pushes the plunger 90 back into the receptacle 52 against the urging force of the spring 88. Then, when the recessed portion 50 has reached the plunger 90, the plunger 90 is forced into the recessed portion 50 by the urging force of the spring 88 and temporarily halts the movement of the battery 20.

When the battery 20 is inserted farther, the inclined face 104 of the plunger 90 is pushed back by the wall 50B of the recessed portion 50 and the plunger 90 is removed from the recessed portion 50 and comes into contact with the side face 48 of the battery 20.

As the battery 20 is inserted farther, the corner of the battery 20 then abuts upon the inclined face 66B of the latch portion 66 and pushes the latch portion 66 back into the receptacle 52 against the urging force of the leaf spring 72. When the battery 20 is inserted farther, the recessed portion 50 reaches the latch portion 66, which is driven into the recessed portion 50 by the urging force of the leaf spring 72 and engages and holds the battery 20 in the use position.

Since the latch portion 66, the distal end of the plunger 90, and the wall 50B of the recessed portion 50 are formed at predetermined angles, as described above, the insertion and extraction of the battery 20 is facilitated.

According to the present invention with the above described arrangement, after a battery that is in the use position is disengaged, the movement of the battery is temporarily halted during the unloading process. Thus, the battery will not fall out of the battery storage section.

## Claims

1. Apparatus for releasably storing a battery in a battery storage section of a data processing system, the apparatus comprising:
a recessed portion located in a side of the battery;
first stopping means located in the battery storage section for engaging the recessed portion and for holding the battery in a stored position; and
second stopping means located in the battery storage section between an insertion port of the battery storage section and the first stopper, for engaging the recessed portion of the battery when the battery is being released from the stored position.

2. Apparatus as claimed in claim 1, wherein the first stopping means comprises:
a latch lever supported rotatably at a middle portion, the latch lever having a latch portion formed at one end and a knob formed at the other end, the latch portion being adapted to engage the recessed portion in the side of the battery, and the knob being operable externally of the battery storage section; and
first forcing means for driving the latch portion toward the battery; and wherein the second stopping means comprises:
a plunger located closer to the insertion port of the battery storage section than the latch portion, for entering and engaging the recessed portion of the battery as the battery is removed from the battery storage section; and
second forcing means for driving the plunger toward the battery.

3. Apparatus as claimed in claim 2, wherein the first forcing means comprises a leaf spring which is an integrally formed adjunct of the latch lever and which has a free end that contacts a wall of the battery storage section so as to push the latch portion toward the battery.

4. Apparatus as claimed in claim 2 or 3, wherein the plunger presses down a rotary shaft of the latch lever.

5. Apparatus as claimed in claim 2, 3, or 4, wherein a wall of the recessed portion toward the back of the battery storage section is perpendicular to the direction of movement of the battery during insertion into and removal from the battery storage section, a wall of the recessed portion that is nearer the insertion port of the battery storage portion is inclined toward the insertion port relative to the direction of movement of the battery during insertion into and removal from the battery storage section, inclined faces are formed at the distal end of the plunger in a direction away from the side of the battery, and the distal end of the latch portion is inclined toward the insertion port relative to the direction of movement of the battery during insertion into and removal from the battery storage section.

6. Apparatus as claimed in any one of claims 2 to 5, wherein springs are provided at the back wall of the battery storage section to push the battery toward the insertion port.

7. A computer system comprising:
a system unit having a processor, memory means, input port means and output port means all interconnected by a bus architecture;
user input means connected to the input port means;
a display screen connected to the output port means; and
power supply means connected to the system unit, the user input means, and the display screen, the power supply means comprising apparatus as claimed in any preceding claim.

8. A lap-top computer comprising a computer system as claimed in claim 7.
